# EUROPÄISCHE PATENTSCHRIFT

(11) **EP 1 895 745 B1**
(45) Veröffentlichungstag und Bekanntmachung des Hinweises auf die Patenterteilung: **22.04.2015**
(21) Anmeldenummer: 06119907.1
(22) Anmeldetag: 31.08.2006
(51) Int. Cl.: G06F 17/30, H04M 1/725, H04L 29/08

(54) **Verfahren und Kommunikationssystem zum kontinuierlichen Aufnehmen von Umgebungsdaten**
Method and communication system for continuous recording of data from the environment
Procédé et système de communication pour enregistrer des données sur l'environnement

(43) Veröffentlichungstag der Anmeldung: 05.03.2008
(73) Patentinhaber: Swisscom AG, 3050 Bern (CH)
(72) Erfinder: Lauper, Eric, 3014, Bern (CH)
(74) Vertreter: P&TS SA (AG, Ltd.)

(56) Entgegenhaltungen:
- EP-A- 1 640 879
- DE-A1- 10 344 276
- US-A1- 2004 146 272

## Beschreibung

### Technisches Gebiet

Die Erfindung bezieht sich auf ein Verfahren zur kontinuierlichen Aufnahme von Umgebungsdaten durch ein Mobilgerät entsprechend dem unabhängigen Verfahrensanspruch und ein korrespondierendes Kommunikationssystem.

### Stand der Technik

Die Japanische Patentanmeldung JP-A-2002/330223 offenbart das kontinuierliche Aufnehmen von Umgebungsgeräuschen und die Übertragung an einen Fernserver. JP-A-2003/249981 offenbart ein lokales Verfahren zur kontinuierlichen Aufnahme von Umgebungsgeräuschen, was in einem Notfall mit der Zeit und der genauen Position einer Zentrale überspielt werden kann.

DE-A1-199 53 813 offenbart eine Einrichtung, die aus einem Zugang zu einem öffentlichen Kommunikationsnetz, einem Algorithmus zur Spracherkennung, einer Einheit zur Datenverarbeitung, einer Datenbank zur Speicherung von Daten, aus einer Systemuhr sowie einem Terminal besteht und Telefongespräche über einen Spracherkennungsalgorithmus derart verarbeitet, dass personen- bzw. leitungsgebundene Gesprächprotokolle erstellt und abgespeichert werden. Es ist auch die Möglichkeit zur Abgabe eines Ferndiktats gegeben. Gleichzeitig wird eine Stichwortsuchfunktion eines normalen Textverarbeitungssystems erwähnt, um es dem Anwender zu ermöglichen, ein Protokoll thematisch auf Gesprächsinhalte hin zu durchsuchen.

US-A1-2005/0159959 offenbart einen zentralen, netzbasierten Sprachmemorekorder, der eine Spracherkennungsfunktion umfasst und Gespräche aufnimmt, und die so erzeugte Sprachmeldung in eine Textmeldung umwandelt. Die Textmeldung wird dem Benutzer zugestellt, so dass dieser ein Protokoll des Gesprächs erhält. Die Aktivierung erfolgt über eine spezielle Taste, ein Menu oder einen Sprachbefehl.

EP-A2-1 225 754 offenbart einen zentraler Server für Sprachmeldungen, wobei die Ablage aus einem GSM- oder Internet-Endgerät während eines Sprachdialoges offenbart ist und eine automatische Spracherkennung und zusätzliche Metadaten, einschliesslich der Zeit und Emotionen, umfasst. Nachteilig werden diese Meldungen jedoch als Audio-Dateien und nicht als Text abgelegt.

DE-A1-103 30 799 offenbart eine Vorrichtung zur Speicherung von Memos. Dies kann beispielsweise als Box, die in einer Küche an der Wand hängt, oder auch als Mobiltelefon geschehen. Das Ausführungsbeispiel umfasst ein Spracherkennungsprogramm, um den gesprochenen Inhalt in Text zu konvertieren. Der konvertierte Text kann angezeigt, ausgedruckt oder als SMS oder Email weitergeleitet werden. Es wird jedoch nachteilig keine zentrale Datenablage und auch keine Suchmöglichkeiten offenbart.

US-A-6,029,063 offenbart einen netzbasierten "Voice scratchpad", insbesondere für die Ablage von Sprachinhalt während einer telefonischen Verbindung oder wenn das Mobiltelefon im Stand-By Modus ist. US-A-6,038,441 offenbart die Aufnahme einer Sprachmemo für den Gebrauch innerhalb eines Autos mit einer lokale Speicherung. Es können auch externe eingehende Anrufe gespeichert werden.

WO-A1-01/84815 offenbart ein netzbasiertes Memo-Diktiergerät mit einer separaten Verbindung zum Memo-Server. US-B1-6,671,353 offenbart ein lokales Diktiergerät im Mobiltelefon mit einer speziellen Taste zur Aufnahme von Sprache während einer Verbindung.

U52004/0146272 A1 offenbart ein Videosystem mit einer Videokamera, die auf einem Streifenwagen der Polizei montiert ist. Die aufgenommenen Videos werden an einem Terminal zu einem Server hochgeladen, wo sie indexiert werden und dann für das Gerichtspersonal recherchierbar sind.

DE10344276A1 offenbart ein Raumüberwachungssystem mit einem Mobiltelefon, das den Raum Überwacht und bei Detektion eines Geräuschs eine MMS mit der Überwachungsaufzeichnung an ein zweites Mobiltelefon sendet.

EP1640879A1 offenbart, dass Aufnahmedaten in einer Datenbank durch das Anhängen von Metadaten besser recherchiert werden können.

### Darstellung der Erfindung

Es ist ein Ziel der Erfindung, ein Verfahren und ein Kommunikationssystem anzubieten, die sich durch vorteilhaft gegenüber dem im Stand der Technik bekannten Ausführungen unterscheiden und die kontinuierlich aufgenommenen Umgebungsdaten eines Mobilgeräts für den Benutzer zu einem späteren Zeitpunkt besser recherchierbar machen.

Es ist ein weiteres Ziel der Erfindung, ein Verfahren und ein Kommunikationssystem anzubieten, die bei kontinuierlich aufgenommenen Umgebungsdaten eines Mobilgeräts das Mobilgerät entlastet, in dem nur brauchbare Nutzsignale verwertet werden.

Erfindungsgemäss wird dieses Ziel durch ein Verfahren zur kontinuierlichen Aufnahme von Umgebungsdaten durch ein Mobilgerät nach Anspruch 1 gelöst.

Da die Metadaten zusammen mit der Daten abgespeichert werden, kann der Benutzer vorteilhaft mit der vorliegenden Erfindung die Daten oder daraus abgeleitete Dateien recherchieren und selbst lang zurückliegende Ereignisse einfach finden. Die sehr grosse und unübersichtliche Datei, die bei einer kontinuierlichen Aufnahme entsteht, wird durch die vorliegende Erfindung in für den Benutzer sinnvolle Abschnitte oder Unterdateien unterteilt, die ihm erlauben, Informationen leichter wieder zu finden. Vorteilhaft kann der Benutzer zu einem späteren Zeitpunkt selber die Daten oder Datei(en) editieren und unterteilen und Metadaten hinzufügen.

In einer weiteren vorteilhaften Ausführungsform ist es zweckmässig, dass sich das Mobilgerät in einen Schlafmodus schaltet und keine Aufnahme vornimmt, wenn kein sinnvolles Nutzsignal (nachts oder bei sehr grossem Lärm) empfangen wird. Auf diese Weise kann nicht nur der Stromverbrauch des Mobilgeräts reduziert werden, sondern auch die Menge an Daten, die an den Fernserver gesendet und dort abgespeichert werden, wird drastisch reduziert. Das Mobilgerät startet jedoch automatisch erneut die Aufnahme, wenn ein sinnvolles Audio- oder Videosignal empfangen wird.

Diese Ereignisse können benutzerseitig im Mobilgerät oder netzseitig beispielsweise im Mobilfunknetz oder im Fernserver erfasst werden. Sie können prinzipiell automatisch generiert werden, vorprogrammiert sein und/oder individuell vom Benutzer vorgegeben werden. Die externen Ereignisse können den Standpunkt oder Bewegungen des Mobilgeräts umfassen. Auch Datum, Uhrzeit, Anfangszeit oder Dauer eines Gespräches kann ein solches Ereignis sein. Ereignisse innerhalb des Mobilgeräts sind ebenso geeignet, wie Daten von Sensoren, die an das Mobilgerät angeschlossen sind, aufgenommene Gespräche oder ein spezieller Gesprächspartner des Benutzers. Die Stimmung oder Gemütsverfassung des Benutzers kann ebenfalls als Metadaten verwendet werden. Werden Stimmen von mehreren Personen erkannt, kann das System auch diese Personen voneinander unterscheiden und eine entsprechende Angabe als Metadaten ablegen. Der Benutzer kann auch die Personen nennen und das System kann lernen, wie der entsprechende Teilnehmer heisst.

Die Umgebungsdaten können vorzugsweise Geräuschsdaten oder Bilddaten umfassen.

Weitere vorteilhafte Ausführungsformen sind in den Unteransprüchen angegeben.

### Kurze Beschreibung der Figuren

Die Erfindung wird anhand der beigefügten Figuren näher erläutert, wobei
- Fig. 1: ein Kommunikationssystem entsprechend der vorliegenden Erfindung zeigt und
- Fig. 2: eine aufgenommene Datei mit einer erfindungsgemässen Markierung durch Metadaten, die entsprechend externen Ereignissen erzeugt wurden.

### Wege zur Ausführung der Erfindung

Es ist erfindungsgemäss ein Verfahren zur kontinuierlichen Aufnahme von Umgebungsdaten durch ein Mobilgerät 11 offenbart. Das Aufnahmeteil des Mobilgeräts 11 des Benutzers 1 ist kontinuierlich eingeschaltet und nimmt alle Umgebungsdaten wie Geräusche, Gespräche, Telefongespräche, Konferenzen, etc. des Benutzers durch ein eingebautes Mikrophon auf. Es ist in einem anderen Ausführungsbeispiel möglich, dass ein solches Gerät in einem Konferenzsaal fest installiert ist. Die Umgebungsdaten können vorzugsweise neben Geräuschsdaten auch Bilddaten umfassen, die durch das Mobilgerät 11 oder eine angeschlossene Kamera aufgenommen wird.

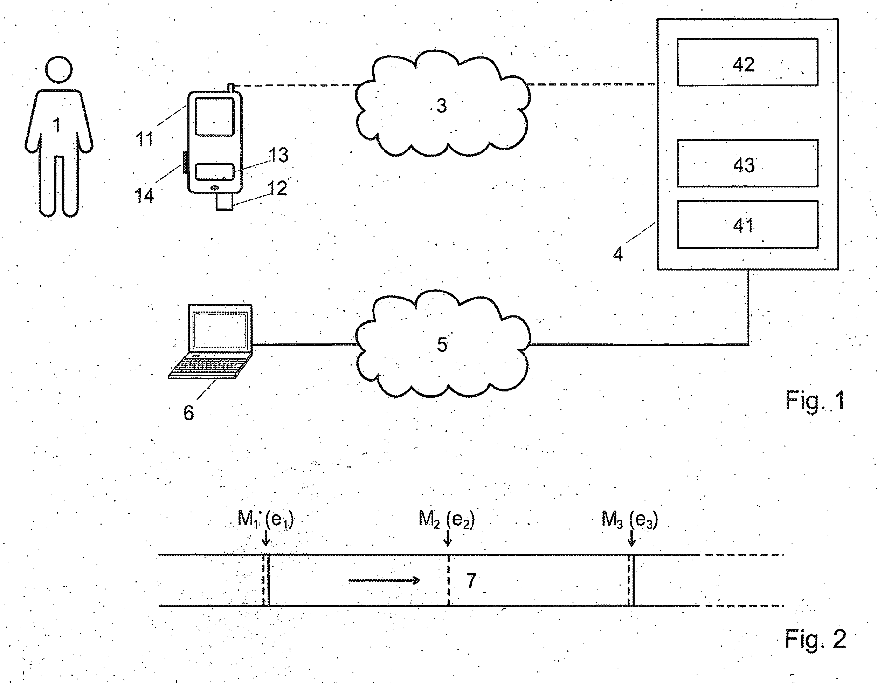

Im Ausführungsbeispiel, welches in der Fig. 1 dargestellt ist, ist der Benutzer 1 mit einem Mobiltelefon, einem PDA oder einem anderen tragbaren Mobilgerät 11 ausgestattet, welches an ein Kommunikationsnetz 3, beispielsweise ein Mobilfunknetz angeschlossen ist. Ein Identifizierungsmodul 12 ist zur Identifizierung des Mobilgeräts 11 in dem Kommunikationsnetz 3 vorhanden, im gegebenen Beispiel handelt es sich um eine SIM-Karte zur Identifizierung in einem Mobilfunknetz. Aus dem Stand der Technik sind verschiedene Mobilfunknetze bekannt, beispielsweise ein GSM-, GPRS, HSCSD, EDGE, UMTS, CDMA-Netz, W-LAN oder IP-Netz über welches auch Daten übermittelt werden können. Gleichwertige Mobilfunknetze können aber ebenso im Rahmen der Erfindung verwendet werden.

Netzseitig ist befindet sich ein Fernserver 4, der beispielsweise vom Betreiber des Mobilfunknetzes 3 oder von einem anderen Dienstanbieter betrieben wird. Er weist einen Speicherbereich 42 auf, der verschiedenen Benutzern 1 zugeteilt und von diesen genutzt wird. Jeder Benutzer kann nach einer erfolgreichen Identifizierung auf seinen eigenen Teil des Speicherbereichs 42 und auf seine dort gespeicherten Texte und Daten zugreifen oder seine Texte und Daten hinterlassen. Der Fernserver 4 ist ebenfalls mit dem benannten Mobilfunknetz 3 oder über das Internet 5 mit dem Mobilfunknetz 3 verbunden.

Um auf seinen Speicherbereich 42 zuzugreifen und Daten oder Texte abspeichern oder abgespeicherte Daten und Texte durchsuchen zu können, muss sich der Benutzer 1 jedoch in einem ersten Schritt gegenüber dem Fernserver 4 identifizieren. Die Identifizierung kann über das genannte Identifizierungsmodul 12 des Mobilgeräts 11, über eine Anruferidentifizierung (Caller-Line-Identification CLI), über biometrische Parameter (Fingerabdruck, Retina-Scan, etc.) und/oder über ein Passwort gegenüber dem Fernserver 4 erfolgen. Es ist auch bekannt, dass als biometrischer Parameter die Stimme des Benutzers 1 verwendet werden kann, wenn dieser mit dem System kommuniziert. Auf diese Weise kann zwischen mehreren Benutzers eines Geräts oder eines Identifizierungsmoduls, zum Beispiel in einer Familie oder wenn mehrere Personen in einem Gespräch sprechen, unterschieden werden. Die Identifizierung des Benutzers 1 kann von dem verwendeten Gerät abhängen, da es denkbar ist, dem Benutzer weitere Zugänge zu dem Fernserver 4 und seinem persönlichen Speicherbereich 42 anzubieten. In der Fig. 1 ist der Fernserver 4 zusätzlich mit dem Internet 5 und einem Internetterminal 6 verbunden. Die Benutzeridentifizierung gegenüber dem Fernserver 4 kann also von dem Gerät 11, 6 abhängen und wird in einer Ausführungsform vom Benutzer 1 in persönlichen Einstellungen ausgewählt und eingestellt.

In einem ersten Schritt des erfindungsgemässen Verfahrens werden kontinuierlich alle Umgebungsgeräusche vom Mobilgerät 11 aufgenommen und eine Datei 7 wird aus den aufgenommenen Daten erstellt. Es ist auch denkbar, dass alle Umgebungsgeräusche vom Mobilgerät 11 aufgenommen, digitalisiert und komprimiert werden, kontinuierlich über das Netz 3 an den Fernserver 4 gestreamt werden und die Datei 7 dort erstellt wird. Die Übertragung der Daten zwischen dem Mobilgerät 11 und dem Fernserver 4 erfolgt vorzugsweise über in permanent aktive IP- Verbindung, etwa in einem W-LAN, GPRS oder UMTS Netz. Eine Datenübertragung von einzelnen Dateien, beispielsweise als E-Mails, IP-Pakete, MMS, etc, und/oder über ein geschaltetes Netzwerk ist aber auch möglich.

Es ist auch eine lokale Pufferung von empfangenen Signalen oder Dateiteilen im Speicher des Mobilgeräts 11 vor der Übertragung an den Fernserver 4 möglich, zum Beispiel wenn das Mobilgerät nicht an das Netz 3 angeschlossen ist oder um eine permanente Verbindung mit dem Fernserver zu vermeiden. Periodische, zum Beispiel stündliche oder tägliche, Synchronisierung der Daten zwischen dem Pufferspeicher des Mobilgeräts und dem Fernserver ist auch denkbar.

Die Audiodaten können im Mobilgerät 11 komprimiert werden, um die Menge von an den Fernserver gesendeten Daten zu reduzieren. Möglich ist beispielsweise eine Umwandlung der Daten in ein MP3-Format. Falls die später beschriebene Umwandlung der Audiodaten in Text im Mobilgerät, und nicht im Netz 3, erfolgt, kann auf die Komprimierung der Audiodaten verzichtet werden; in diesem Fall wird nur der umgewandelte Text komprimiert.

Eine Verschlüsselung der übertragenen Audio-, Video- und/oder Textdaten kann auch vorgesehen werden, um deren Vertraulichkeit zu gewährleisten.

Das Signieren der übertragenen Audio-, Video- oder Textdaten durch das Mobilgerät 11 mittels eines Zertifikates kann auch vorgesehen werden, um die Echtheit zu gewährleisten.

Gleichzeitig zu der kontinuierlichen Aufnahme werden einzelne externe Ereignisse e₁, e₂, e₃ in Bezug auf das Mobilgerät 11 und/oder den Benutzer 1 erfasst. Diese Ereignisse e₁, e₂, e₃ werden benutzerseitig im Mobilgerät 11 oder netzseitig beispielsweise im Mobilfunknetz 3 oder im Fernserver 4 registriert und möglicherweise mit den zugehörigen Aufnahmedaten verknüpft. Sie können prinzipiell automatisch generiert werden, vorprogrammiert sein und/oder individuell vom Benutzer 1 vorgegeben werden. Der Benutzer 1 kann die Ereignisse e₁, e₂, e₃, welche er für wichtig erachtet, beispielsweise in Benutzeroptionen angeben, wenn er sich in dem ihm zugeordneten Speicherbereich 42 im Fernserver 4 eingeloggt hat. In einer anderen Variante gibt der Benutzer 1 die Ereignisse e₁, e₂, e₃ in dem Mobilgerät 11 vor. Da das Mobilgerät 11 kontinuierlich eingeschaltet ist und alle Umgebungsgeräusche aufnimmt, kann der Benutzer 1 per Tastendruck und/oder Sprachbefehl ein solches Ereignis erzeugen und möglicherweise gleichzeitig eine Beschreibung des Ereignisses eingeben und/oder diktieren.

Die externen Ereignisse e₁, e₂, e₃ können den Standpunkt oder Bewegungen oder Änderungen des Standorts des Mobilgeräts 11 umfassen. Der Standort kann durch ein im Mobilgerät 11 vorhandenes GPS oder durch Signale im Mobilfunknetz 3 ermittelt werden. Bewegungen können von Bewegungssensoren im Mobilgerät 11 aufgenommen werden. Auch Datum, Uhrzeit, Anfangszeit oder Dauer eines Gespräches können solche Ereignisse e₁, e₂, e₃ sein. Ereignisse innerhalb des Mobilgeräts 11 (Empfangen oder Senden von SMS, MMS, Liste der Telefongespräche, Logbuchfunktion des Mobilgeräts, Verbindung, die über Bluetooth entstanden sind, Aufnehmen eines Fotos, etc.) sind ebenso geeignet, wie Daten von Sensoren 14, die an das Mobilgerät 11 angeschlossen sind (Aussentemperatur, Gaskonzentration, Druck, Pollen, etc.). Es kann sich auch um aufgenommene Gespräche (Konferenzen, bei Einkauf, im Kindergarten, etc.) oder um einen speziellen Gesprächspartner des Benutzers 1 handeln. Auch die Stimmung oder Gemütsverfassung des Benutzers 1 allenfalls in Kombination mit emotionalen Merkmalen wie Stress, Lügen etc. kann dem Text zusätzlich zugeordnet werden. Werden Stimmen von mehreren Personen erkannt (beispielsweise Teilnehmer eines Telefongespräches), kann das System auch diese Personen voneinander unterscheiden und eine entsprechende Angabe ablegen ("Teilnehmer A sagt: ", "Teilnehmer B antwortet: ", etc.). Der Benutzer kann auch die Personen nennen und das System kann lernen, wie der entsprechende Teilnehmer heisst. Oder umgekehrt kann es sein, dass eine Person eine Zeitlang oder eine vorbestimmte Periode nicht mehr zu hören ist, was dann als Ereignis erfasst wird. Erfolgt die Aufnahme über mehrere Mikrophone können Räumlichkeitsmerkmale bzw. Merkmale im Raum als Ereignis definiert werden.

Auf der anderen Seite kann auch der Inhalt der Datei zu einer Unterteilung oder Indexierung führen. Das System kann in diesem Fall den gesprochenen Inhalt automatisch analysieren und nach Themen klassifizieren, um etwa ein Gespräch über Fussball von einem professionellen Sitzung zu unterscheiden und den Daten entsprechend zu markieren und zu unterteilen. Vorbestimmte Geräusche wie das Hupen von Autos, Wecker, Fluglärm, Fernsehslogan, Jingle im Radio, etc. oder von anderen Geräten in der Umgebung (PDA, PC, Fernsehgerät, Radio, Wecker, Klingeln eines Mobiltelefons etc) können ebenfalls als Ereignisse verwendet werden.

Selbstverständlich ist eine Kombination der genannten Ereignisse e₁, e₂, e₃ und/oder des Inhalts der Datei 7 (Gespräch mit XY am 12.02. in Stuttgart über Autos, sonntags morgens um 8 h, etc.) im Rahmen der Erfindung möglich.

Aus den externen Ereignissen e₁, e₂, e₃ werden erfindungsgemäss Metadaten M₁, M₂, M₃ erzeugt und diese Metadaten M₁, M₂, M₃ werden der erzeugten Datei 7 zeitlich entsprechend dem externen Ereignis e₁, e₂, e₃ zugeordnet oder diese Datei 7 wird durch die Metadaten M₁, M₂, M₃ unterteilt. Diese Metadaten M₁, M₂, M₃ werden zusammen mit der Datei 7 abgespeichert und dienen dazu, dass der Benutzer 1 die Datei 7 besser recherchieren kann. So können Fragen wie "Vor zwei Jahren habe ich mit Hr. XY gesprochen und der hat mir eine wichtige Information gegeben, aber ich weiss nicht mehr was er gesagt hat" oder "Es war der heisseste Tag im Sommer als ich in Spanien ein interessantes Gespräch hatte, das ich mir gern noch einmal anhören würde" können leicht beantwortet werden. Die sehr grosse und unübersichtliche Datei 7, die bei einer kontinuierlichen Aufnahme entsteht, wird durch die vorliegende Erfindung in für den Benutzer sinnvolle Abschnitte oder Unterdateien unterteilt, die ihm erlauben wichtige Informationen leichter wieder zu finden.

Eine schematische Ansicht der Zuordnung von der erzeugten Datei 7 zu den Metadaten M₁, M₂, M₃ ist in Fig. 2 sichtbar. Um die abgespeicherten Daten recherchierbar zu machen, befindet sich entweder im Mobilgerät 11, im Fernserver 4 oder einem anderen Teil des Mobilfunknetzes 3 ein Spracherkennungssystem 13, 41, welches die aufgenommene Gespräche analysiert und in einen Text umwandelt. Der auf diese Weise erzeugte Text wird in dem dem Benutzer 1 zugeordneten Speicherbereich 42 des Fernservers 4 abgespeichert. Es ist ersichtlich, dass auch die Textdatei, die mit der Sprachdatei korrespondiert, mit den Metadaten M₁, M₂, M₃ versehen oder die Datei durch diese Metadaten M₁, M₂, M₃ unterteilt werden. Die Unterteilung kann auch in verschiedene Dateien vorgenommen werden, wobei jede Datei mit den entsprechenden Metadaten verbunden ist, so dass diese entsprechend den Ereignissen recherchierbar sind.

Das verwendete Spracherkennungssystem 13, 41 kann benutzerabhängige Sprachmodelle verwenden, die zuvor erstellt und zentral abgespeichert worden sind. Da der Benutzer 1 in jedem Fall identifiziert wird, kann auf die abgespeicherten, benutzerabhängigen Sprachmodelle zurückgegriffen werden. Durch neue Gespräche des Benutzers 1 können gleichzeitig neue Sprachmodelle für den Benutzer 1 erstellt werden. Durch die Identifizierung des Benutzers und die Verwendung von sprecherabhängigen Sprachmodellen kann vorteilhaft die Zuverlässigkeit der Spracherkennung erhöht werden. Die automatische Erkennung der Sprache ermöglicht es gleichzeitig, das Spracherkennungssystem 13, 41 unabhängig von der verwendeten Sprache oder Dialekt zu verwenden.

In einer anderen Ausführungsform muss der Benutzer 1 ein Java-Applet oder ein anderes, kleines Programm auf seinem Mobilgerät 11 installieren, bevor er den Dienst nutzen kann. Dieses Programm bietet dem Benutzer 1 ein Menu oder ein Sprachmenu an, um die verschiedenen Funktionen des Dienstes erreichen zu können. Das Programm kontrolliert auch die kontinuierliche Aufnahme aller Umgebungsgeräusche und leitet sie automatisch an den Fernserver 4 weiter. Es kann auch die bereits erwähnte Funktion <Erzeugung eines manuellen Ereignisses> durch den Benutzer 1 durch Tastendruck und/oder Sprachbefehl und den später erwähnten Schlafmodus umfassen.

Zudem ist es in einer weiteren Ausführungsform denkbar, weitere Daten, die dem Benutzer oder seinem Mobilgerät zur Verfügung stehen, an den Fernserver zu senden und in dem Speicherbereich 42 des Fernservers 4 abzuspeichern. Zu diesen Daten gehören beispielsweise Kopien von allen gesendeten oder empfangenen SMS, MMS, E-Mails, Fotos, die mit der Kamera des Mobilgeräts 11 gemacht wurden, das Telefonverzeichnis des Benutzers 1 im Mobilgerät 11 oder auch Einträge in einem Kalender im Mobilgerät 11. Auch Berichte über die Aktivitäten des Mobilgeräts (Angaben über eingehende oder ausgehende Anrufe, Kosten dieser Verbindungen, Verbindungen, die über Bluetooth entstanden sind, etc.) oder Daten, die vom Mobilgerät 11 über eine Schnittstelle im Nahbereich (Bluetooth, Infrarot, etc.) empfangen worden sind, können ebenfalls auf einfache Weise in dem Fernserver 4 abgelegt werden. Auch Meldungen, die für den Benutzer 1 in einer persönlichen, netzwerkbasierten Sprachmeldungsbox (Voicemail) 43 abgelegt werden, können in dem Fernserver 4 gespeichert oder dorthin kopiert werden. In der Fig. 1 befindet sich die netzwerkbasierten Sprachmeldungsbox 43 ebenfalls im Fernserver 4. Dies ist aber nicht unbedingt notwendig und diese kann sich auch in irgendeinem anderen Teil des Mobilfunknetzes 3 oder im Benutzergerät 11 befinden.

Da sich der Benutzer 1 auch über einen Computer 6 und das Internet 5 mit dem Fernserver 4 verbinden kann, können prinzipiell Daten, die im Computer 6 entstehen oder gespeichert sind, automatisch oder mit einer Bestätigung des Benutzers in den Speicherbereich 42 kopiert werden. Es kann sich also um Daten (Emails, Adressbuch, Kalenderfunktion, etc.) eines Mailprogrammes, um allgemeine Textdokumente, um Daten von einem VolP-Dienst des Benutzers 1 und/oder um Daten, die aus bei einem Internetchat entstanden, handeln.

Zusätzlich können permanent eine Videoaufnahmen vom Mobilgerät 11 oder ein mit dem Mobilgerät 11 verbundenen Gerät gemacht werden und die Daten ebenfalls an den Fernserver 4 gesendet, unterteilt und/oder indexiert werden. Das externe Gerät kann eine über Bluetooth oder mit anderen Mitteln (Kabel und USB, Infrarot, Near field Communication NFC, etc.) verbundene Kamera, ein Scanner oder ein Virtual Retinal Display (VRD) sein. So kann nicht nur übertragen werden, was der Benutzer hört, sondern auch was er sieht. Der visuelle Inhalt kann auch analysiert werden und Ereignisse für die Unterteilung/Indexierung auf Basis von diesem Inhalt generiert werden.

Falls der Benutzer 1 über ein Eye Tracking System verfügt kann seine Blickrichtung festgehalten werden und ein Bilddatenaufnahmegerät kann die Bilddaten, die der Blickrichtung entsprechen, aufnehmen und somit die Datenmenge stark reduzieren. Die Aufnahme der Umgebungsgeräusche kann nach demselben Prinzip auf die Blickrichtung beispielsweise mittels orientierten Richtmikrophonen geschehen.

Für die Speicherung aller Texte und Daten stehen im Rahmen der Erfindung verschiedene Möglichkeiten zur Verfügung. In einer ersten Ausführungsform werden alle Dokumente in einem suchbaren Format, zum Beispiel Text, einschliesslich XML oder VoiceXML, oder als Datenbankformat, im Mobilgerät oder im Fernserver umgewandelt und vorzugsweise zusammen mit den Metadaten M₁, M₂, M₃ abgespeichert, so dass die Information leicht recherchierbar ist. Gleichzeitig wird die zugehörige Audiodatei *.wav, *.mp3, etc., die zu dem Text gehört, in dem Speicherbereich 42 abgespeichert. Damit hat der Benutzer 1 die Möglichkeit, das Dokument bei Bedarf zu einem späteren Zeitpunkt noch einmal anzuhören. In einer weiteren Ausführungsform wird die zugehörige Audiodatei nur in dem Speicherbereich abgespeichert, wenn es bei der Spracherkennung Zweifel an der Richtigkeit des erkannten Texts gegeben hat. Gleichzeitig werden den abgespeicherten Dokumenten die Metadaten M₁, M₂, M₃ der genannten Ereignisse e₁, e₂, e₃ zugeordnet und mit diesem abgespeichert werden.

Auch eine Addition von einem markierten Index in einem Audiofile ist möglich.

Einzelne Dateien, die zusätzlich importiert wurden, können mit einem Wasserzeichen markiert werden, was die Suche nach dem Dokument erleichtert oder die Ursprung oder Echtheit des Dokuments beweisen kann. Dem Benutzer wird zusätzlich die Möglichkeit gegeben, von seinem Mobilgerät 11 oder dem PC 6 aus, die abgespeicherten Texte und Daten zu editieren und auf eine von ihm gewünschte Weise zu klassifizieren oder zu unterteilen. So kann er zu einem späteren Zeitpunkt zusätzliche Metadaten M₁, M₂, M₃ in die Datei 7 einzufügen, die die Recherchierbarkeit erhöhen.

Es ist zweckmässig, dass sich das Mobilgerät 11 in einen Schlafmodus schaltet und keine Aufnahme von Umgebungsdaten vornimmt, wenn kein sinnvolles Nutzsignal empfangen wird. Dies kann nachts sein, wenn der Benutzer 1 schläft, wenn nur unverständlicher Lärm aufgenommen wird oder wenn der Benutzer einen expliziten Befehl dazu gibt. Auf diese Weise kann nicht nur der Stromverbrauch reduziert werden, sondern auch die Menge an Daten 7, die an den Fernserver 4 gesendet und dort abgespeichert werden, wird drastisch reduziert. Das Mobilgerät 11 enthält jedoch eine Schaltung, die eine erneute Aufnahme startet, wenn ein sinnvolles Audiosignal empfangen wird.

Für den Schlafmodus gibt es verschiedene Varianten. Das Mobilgerät 11 kann alle externen Geräusche aufnehmen, digital umwandeln und analysieren. Wenn diese vom Mobilgerät 11 nicht als sinnvoll erkannt werden, werden diese nicht an den Fernserver 4 übertragen. Es ist auch denkbar, dass das Mobilgerät 11 alle Geräusche aufnimmt und wenn diese vor der digitalen Umwandlung als nicht sinnvoll erkennt, das Gerät 11 in den Schlafmodus wechselt. Mehrere von diesen Schlafmoden können im selben Mobilgerät verwendet werden, zum Beispiel konsekutiv oder als Reaktion zu unterschiedlichen Bedingungen.

Der Schlafmodus der Aufnahmefunktion kann unabhängig vom Schlafmodus des Mobilgeräts 11 sein. Das heisst, dass das Mobilgerät 11 ausgeschaltet sein kann und eine Aufnahme gestartet werden kann, wenn ein Geräusch aufgenommen wird.

Das Setzen eines Schlafmodus oder Wecken aus dem Schlafmodus kann auch von verschiedenen Faktoren abhängig sein. Als Beispiel werden hier genannt, dass es automatisch von einem Geräusch, in Abhängigkeit von benannten Ereignissen, vom Benutzer, automatisch periodisch oder vom Fernserver 4 initiiert wird. Ereignisse e₁, e₂, e₃ können auch an den Fernserver 4 übertragen werden, wenn sich Mobilgerät 11 im Schlafmodus befindet.

In allen genannten Ausführungsformen hat der Benutzer 1 die Möglichkeit, in einem Benutzprofil Angaben über die von ihm gewünschten Einstellungen in Bezug auf die Abspeicherung der Daten zu machen. Es ist dem Benutzer auch möglich, verschiedene Texte, Daten oder Stellen innerhalb der Datei 7, die mit speziellen Metadaten M₁, M₂, M₃ gekennzeichnet sind, mit verschiedenen Zugriffsrechten für verschiedene Personen oder Gruppen zu versehen. Auf diese Weise kann der Benutzer seiner Familie, seinen Freunden oder seinen Arbeitskollegen selektiv die Erlaubnis geben, auf die abgespeicherten Daten zuzugreifen. Diese Personen können sich auf dieselbe Weise wie der Benutzer 1 in den Fernserver einloggen: durch ein Mobilgerät 11 über ein Mobilfunknetz 3 oder einen Computer 6 und das Internet 5. Ein Zugriff auf die Dokumente im Fernserver 4 ist also immer möglich, auch wenn der Benutzer sein Mobilgerät 11 verloren hat oder defekt sein sollte. Einige Dokumente oder Textstellen innerhalb der Datei 7 können auch als geheim oder nur dem Benutzer zugänglich markiert werden, so dass keine anderen Personen auf diese Dokumente Zugriff als der Benutzer 1 selber hat.

Für die Suche stehen erfindungsgemäss verschiedene Möglichkeiten zur Verfügung. Der Benutzer kann mit dem Mobilgerät 11 oder dem Computer 6 eine Suchmaschine aktivieren und Dokumente in seinem Bereich anhand von Stichworten suchen. Mit den Stichworten kann nicht nur den Inhalt der abgelegten Dokumente recherchiert werden, sondern auch die genannten Metadaten M₁, M₂, M₃, die diese Daten kennzeichnen. Die Suchmaschine wird vorzugsweise vom Betreiber des Servers betrieben und indexiert nur die Dokumente in diesem Server. Ein Benutzer kann nur nach Dokumenten suchen, die in seinem persönlichen Speicherbereich enthalten sind, oder mindestens nach Dokumente, für welche er Lesezugriffrechte besitzt.

Die Suchmaschine kann ebenfalls ein sprachgesteuertes Menu aufweisen. Diese Möglichkeit bietet sich insbesondere an, wenn ein Sprachkanal vorhanden ist, der von dem Benutzer 1 genutzt werden kann. Der Zugriff auf die Daten kann manuell zu einem vom Benutzer ausgewählten Zeitpunkt erfolgen, wenn er eine bestimmte Information sucht. Auch ein automatischer oder halbautomatischer Zugriff kann vorgesehen sein. In diesem Fall könnte eine Alarmfunktion den Benutzer an einen Termin erinnern oder es könnte sich um ein vom Benutzer voreingestelltes Kriterium (beispielsweise Ort oder Ereignis) handeln. Diese Zugriffe kann der Benutzer beispielsweise in den Benutzeroptionen angeben. In einem weiteren Ausführungsbeispiel könnte der Zugriff auf die Daten auch über die netzwerkbasierte Sprachmeldungsbox 43 erfolgen.

Die Daten eines Kalenderprogramms wie Outlook können im Fernserver 4 abgelegt werden bzw. der Fernserver 4 kann mit einem Kalenderprogramm wie Outlook synchronisiert werden. Sofern der Standort der aufgenommenen Dokumente bekannt ist, können die geographisch aufbereitet und in einer Karte dargestellt werden und Fragen wie "Welche Gespräch hatte ich bloss in Kreuzberg aufgenommen? Wo ist meine KaDeWe Quittung? Wie teuer war der Kaffee in Venedig?" können anhand der Karte einfacher beantwortet werden. Das Programm für solche Kalender oder geographische Anwendungen kann im Mobilgerät 3, in einem Rechner des Benutzers, und/oder im Fernserver 4 durchgeführt werden.

Von dem Mobilgerät 11 aus kann der Benutzer 1 über ein sprachgesteuertes Menu, über eine WAP-Funktion, durch das Senden einer SMS, etc. auf seine Daten zugreifen und diese durchsuchen. Die Ergebnisse können als Text empfangen (WAP, SMS, USSD, etc.) und dem Benutzer wiedergegeben werden. Wenn eine Audiodatei vorhanden ist, kann dem Benutzer 1 diese Originaldatei mit der ursprünglich aufgenommenen Information vorgespielt werden. Auch die Synthetisierung einer Textdatei mit der Stimme des Benutzers oder einer anderen, möglicherweise bekannten oder berühmten Stimme ist möglich. Sofern ein Computer 6 verwendet wird, ergeben sich zusätzliche Möglichkeiten. Der Benutzer kann auf ein Suchergebnis über eine Internetseite zugreifen oder es kann ihm als E-Mail zugesendet werden. Prinzipiell können auch hier die Daten als Text oder (wenn vorhanden) als Audiodatei vorgespielt werden.

Dem Benutzer kann die Benutzung des persönlichen Speicherbereichs 42 für die Abspeicherung der Datei 7 von einem Serviceanbieter verrechnet werden. Die Art und Weise wie die Kosten verrechnet werden, kann verschieden sein. Eine Möglichkeit besteht aus einer umfassenden Gebühr für die Verwendung des Dienstes, beispielsweise als Teil seines monatlichen Abonnements für das Mobilgerät 11. Auch eine Verrechnung gemäss dem verwendeten Speicherplatz oder nur für die übertragenen Datenvolumina beim Abspeichern oder beim Suchen und Abhören der Daten ist denkbar. Abhängig von einem Benutzerprofil, entsprechend einer oder mehreren durchgeführten Suchen oder in Abhängigkeit vom Inhalt eines abgelegten Textes oder von abgelegten Daten kann dem Benutzer in einer weiteren Ausführungsform Werbung zugesandt werden.

Die Erfindung bezieht sich neben dem Verfahren auch auf ein Kommunikationssystem und ein Mobilgerät mit den Merkmalen der unabhängigen Vorrichtungsansprüche.

### Bezugszeichenliste

- 1: Benutzer
- 11: Mobilfunkgerät
- 12: Identifikationsmodul
- 13: Spracherkennungssystem
- 14: Sensor
- 3: Kommunikationsnetz
- 4: Fernserver
- 41: Spracherkennungssystem
- 42: Speicherbereich
- 43: Sprachmeldungsbox des Benutzers 1
- 5: Internet
- 6: Computer, Internetterminal
- 7: Datei

- e₁, e₂, e₃: Ereignis
- M₁, M₂, M₃: Metadaten

## Patentansprüche

1. Verfahren zur kontinuierlichen Aufnahme von Umgebungsdaten durch ein Mobilgerät (11), umfassend die Verfahrensschritte
(a) das Mobilgerät (11) eines Benutzers (1) nimmt kontinuierlich Umgebungsdaten auf und sendet die Daten an einen Fernserver, wobei das Mobilgerät (11) ein Mobiltelefon ist und ein Identifizierungsmodul (12) zur Identifizierung des Mobilgeräts (11) des Benutzers (1) in einem Mobilfunknetz (3) aufweist;
(b) die Daten werden automatisch in Abhängigkeit vom Inhalt der Daten und/oder von Metadaten (M₁, M₂, M₃), die aus externen Ereignissen (e₁, e₂, e₃) in Bezug auf das Mobilgerät (11) und/oder den Benutzer (1) erzeugt werden, unterteilt und/oder indexiert,
(c) die unterteilten und/oder indexierten Daten werden in einem dem Benutzer (1) zugeordneten Speicherbereich (42) in dem Fernserver (4) gespeichert,
(d) nach einer Identifizierung des Benutzers werden die unterteilten und/oder indexierten Daten in dem Speicherbereich (42) von dem Mobilgerät (11) aus recherchiert.

2. Verfahren gemäss Anspruch 1, **dadurch gekennzeichnet, dass** im Mobilgerät (11) oder im Fernserver (4) aus den aufgenommenen Daten eine oder eine Vielzahl von Dateien (7) erzeugt werden.

3. Verfahren gemäss Anspruch 2, umfassend die Verfahrensschritte:
die Metadaten (M₁, M₂, M₃) werden der erzeugten oder einer daraus abgeleiteten Datei (7) zeitlich entsprechend dem externen Ereignis (e₁, e₂, e₃) derart zugeordnet oder diese Datei (7) wird durch die Metadaten (M₁, M₂, M₃) derart unterteilt, dass die Datei (7) entsprechend den zuordneten Metadaten (M₁, M₂, M₃) recherchierbar ist.

4. Verfahren gemäss Anspruch 2 oder 3, **dadurch gekennzeichnet, dass** das Mobilgerät (11) ein an ein Mobilfunknetz (3) angeschlossenes Mobiltelefon ist und alle aufgenommenen Umgebungsdaten an einen Fernserver (4) gesendet und dort die benannte Datei (7) zusammen mit den Metadaten (M₁, M₂, M₃) in einem dem Benutzer zugeordneten Speicherbereich (42) gespeichert werden.

5. Verfahren gemäss einem der Ansprüche 1 bis 4, **dadurch gekennzeichnet, dass** die externen Ereignisse (e₁, e₂, e₃) automatisch erfasst werden, vorprogrammiert sind und/oder individuell vom Benutzer (1) vorgegeben werden.

6. Verfahren gemäss einem der Ansprüche 1 bis 5, **dadurch gekennzeichnet, dass** der Inhalt der Daten und die externen Ereignisse (e₁, e₂, e₃) den Standpunkt oder Änderungen des Standpunkts des Mobilgeräts (11), Merkmale im Raum, Datum, Zeit, Ereignisse innerhalb des Mobilgeräts (11) oder Daten von Sensoren (14), die an das Mobilgerät (11) angeschlossen sind, vorbestimmte Geräusche innerhalb der Datei, die in der Umgebung wahrzunehmen sind, und/oder aufgenommene Gespräche oder Gesprächspartner des Benutzers (1) umfassen.

7. Verfahren gemäss einem der Ansprüche 1 bis 6, **dadurch gekennzeichnet, dass** sich das Mobilgerät (11) in einem Schlafmodus befindet, wenn kein sinnvolles Nutzsignal empfangen wird.

8. Verfahren gemäss einem der Ansprüche 1 bis 7, **dadurch gekennzeichnet, dass** das Mobilgerät (11) alle Daten aufnimmt, digital umgewandelt und analysiert und wenn diese nicht als sinnvoll erkannt werden, nicht an den Fernserver (4) überträgt.

9. Verfahren gemäss einem der Ansprüche 1 bis 7, **dadurch gekennzeichnet, dass** das Mobilgerät (11) alle Daten aufnimmt und wenn diese vor der digitalen Umwandlung als nicht sinnvoll erkennt, das Gerät (11) in einen Schlafmodus wechselt.

10. Verfahren gemäss einem der Ansprüche 1 bis 9, **dadurch gekennzeichnet, dass** ein Schlafmodus der Aufnahmefunktion unabhängig vom Schlafmodus des Mobilgeräts (11) ist.

11. Verfahren gemäss einem der Ansprüche 7 bis 10, **dadurch gekennzeichnet, dass** das Setzen eines oder Wecken aus dem Schlafmodus automatisch von einem Geräusch oder einem Bild, automatisch in Abhängigkeit von benannten Ereignissen, vom Benutzer oder automatisch periodisch oder vom Fernserver (4) initiiert wird.

12. Verfahren gemäss einem der Ansprüche 7 bis 11, **dadurch gekennzeichnet, dass** Ereignisse (e₁, e₂, e₃) von Mobilgerät (11) auch an den Fernserver (4) übertragen werden, wenn Mobilgerät (11) sich im Schlafmodus befindet.

13. Verfahren gemäss einem der Ansprüche 1 bis 12, **dadurch gekennzeichnet, dass** eine lokale Pufferung von empfangenen Signalen oder Dateiteilen im Speicher des Mobilgeräts (11) vor der Übertragung an den Fernserver (4) stattfindet.

14. Verfahren gemäss einem der Ansprüche 1 bis 13, **dadurch gekennzeichnet, dass** ein Spracherkennungssystem (13, 41) die aufgenommenen Daten in eine Textdatei umwandelt und die Metadaten (M₁, M₂, M₃) der erzeugten Textdatei zeitlich entsprechend dem externen Ereignis (e₁, e₂, e₃) zugeordnet werden.

15. Verfahren gemäss einem der Ansprüche 1 bis 14, **dadurch gekennzeichnet, dass** ein Spracherkennungssystem (13, 41) die aufgenommene Daten in eine Textdatei umwandelt und verschiedene Gesprächspartner eines Gesprächs erkennt und die Teilnahme mindestens eines Gesprächspartners als Metadaten (M₁, M₂, M₃) verwendet wird.

16. Verfahren gemäss Anspruch 14 oder 15, **dadurch gekennzeichnet, dass** das verwendete Spracherkennungssystem (13, 41) benutzerabhängige Sprachmodelle verwendet.

17. Verfahren gemäss einem der Ansprüche 14 bis 16, **dadurch gekennzeichnet, dass** durch neue Gespräche neue Sprachmodelle für die jeweiligen Gesprächsteilnehmer erstellt werden.

18. Verfahren gemäss einem der Ansprüche 14 bis 17, **dadurch gekennzeichnet, dass** die Spracherkennung lokal im Mobilgerät (11) oder im Fernserver (4) vorgenommen wird.

19. Verfahren gemäss einem der Ansprüche 14 bis 18, **dadurch gekennzeichnet, dass** die aufgenommene Daten und/oder die Textdatei abgespeichert werden.

20. Verfahren gemäss einem der Ansprüche 1 bis 19, **dadurch gekennzeichnet, dass** an den Fernserver (4) übertragenen Audio-, Video- oder Textdaten durch das Mobilgerät (11) mittels eines Zertifikates signiert werden, um die Echtheit der Daten zu gewährleisten.

21. Verfahren gemäss einem der Ansprüche 1 bis 20, **dadurch gekennzeichnet, dass** der Benutzer (1) der besagten aufgenommenen Daten weitere Daten hinzufügt.

22. Verfahren gemäss einem der Ansprüche 1 bis 21, **dadurch gekennzeichnet, dass** die aufgenommenen Daten zu einem späteren Zeitpunkt nach der Aufnahme vom Benutzer mit Metadaten (M₁, M₂, M₃) markiert werden.

23. Verfahren gemäss einem der Ansprüche 1 bis 22, **dadurch gekennzeichnet, dass** verschiedene Personen Zugriffrechte auf verschiedene Stellen der Daten haben, die mit bestimmten Metadaten (M₁, M₂, M₃) gekennzeichnet sind.

24. Verfahren gemäss einem der Ansprüche 1 bis 23, **dadurch gekennzeichnet, dass** der Benutzer (1) auf die aufgenommenen Daten vom Mobilgerät (11) aus, über eine Internetseite oder über ein Kalenderprogramm Zugang hat und diese Daten nach Inhalten oder nach Metadaten (M₁, M₂, M₃) recherchiert.

25. Verfahren gemäss einem der Ansprüche 1 bis 24, **dadurch gekennzeichnet, dass** die Recherche über einen Sprachbefehl stattfindet.

26. Verfahren gemäss einem der Ansprüche 1 bis 25, **dadurch gekennzeichnet, dass** auf dem Mobilgerät (11) ein Programm oder Applet vorhanden ist, welches die kontinuierliche Aufnahme und die Verarbeitung der aufgenommen Daten vornimmt.

27. Verfahren gemäss einem der Ansprüche 1 bis 26, **dadurch gekennzeichnet, dass** ein Dienstanbieter einem Benutzer (1) eines Mobilgeräts (11) ein solches Verfahren anbietet und einen entsprechenden Dienst dem Benutzer (1) verrechnet.

28. Verfahren gemäss einem der Ansprüche 1 bis 27, **dadurch gekennzeichnet, dass** permanent eine Videoaufnahme vom Mobilgerät (11) oder ein mit dem Mobilgerät (11) verbundenen Gerät gemacht wird und die Daten ebenfalls an den Fernserver (4) gesendet werden.

29. Verfahren gemäss einem der Ansprüche 1 bis 28, **dadurch gekennzeichnet, dass** die Unterteilung und/oder Indexierung der aufgenommenen Daten durch Konversion in eine Markup-Language Datei (XML,VoiceXML) geschieht, die eine Unterteilung in verschiedene Dateien vornimmt, wobei jede Datei mit Metadaten verbunden ist, oder durch Addition von einem markierten Index in einem Audiofile geschieht.

30. Verfahren gemäss einem der Ansprüche 1 bis 29, **dadurch gekennzeichnet, dass** die Recherchenergebnisse als Text oder als synthetische Stimme wiedergegeben werden.

31. Kommunikationssystem zur kontinuierlichen Aufnahme von Umgebungsdaten, umfassend
(a) ein Mobilgerät (11) eines Benutzers (1) ausgebildet zur kontinuierlichen Aufnahme von Umgebungsdaten und zum Senden der Daten an einen Fernserver (4), wobei das Mobilgerät (11) ein Mobiltelefon ist und ein Identifizierungsmodul (12) zur Identifizierung des Mobilgeräts (11) des Benutzers (1) in einem Mobilfunknetz (3) aufweist,
(b) Mittel, um die aufgenommenen Daten automatisch in Abhängigkeit vom Inhalt der Daten und/oder von Metadaten (M₁, M₂, M₃), die aus externen Ereignissen (e₁, e₂, e₃) in Bezug auf das Mobilgerät (11) und/oder den Benutzer (1) erzeugt werden, zu unterteilen und/oder zu indexieren und
(c) einen dem Benutzer zugeordneten Speicherbereich (42) in dem Fernserver (4) ausgebildet die unterteilten und/oder indexierten Daten zu speichern, wobei nach einer Identifizierung des Benutzers die unterteilten und/oder indexierten Daten in dem Speicherbereich (42) von dem Mobilgerät (11) aus recherchierbar sind.

32. Kommunikationssystem gemäss Anspruch 31, **gekennzeichnet, durch** Mittel im Mobilgerät (11) oder im Fernserver (4), um aus den aufgenommenen Daten eine oder eine Vielzahl von Dateien (7) zu erzeugen.

33. Kommunikationssystem gemäss Anspruch 32, **gekennzeichnet, durch** Mittel, um die Metadaten (M₁, M₂, M₃) der erzeugten oder einer daraus abgeleiteten Datei (7) zeitlich entsprechend dem externen Ereignis (e₁, e₂, e₃) derart zuzuordnen oder um diese Datei (7) **durch** die Metadaten (M₁, M₂, M₃) derart zu unterteilen, dass die Datei (7) entsprechend den zuordneten Metadaten (M₁, M₂, M₃) recherchierbar ist.

34. Kommunikationssystem gemäss Anspruch 31 oder 32, **dadurch gekennzeichnet, dass** das Mobilgerät (11) an ein Mobilfunknetz (3) angeschlossen ist und mit dem Mobilfunknetz (3) der Fernserver (4) verbunden ist.

35. Kommunikationssystem gemäss einem der Ansprüche 31 bis 34, **gekennzeichnet durch** ein Spracherkennungssystem (13, 41), welches die aufgenommene Daten in eine Textdatei umwandelt, wobei Mittel vorhanden sind, um die Metadaten (M₁, M₂, M₃) der erzeugten Textdatei zeitlich entsprechend dem externen Ereignis (e₁, e₂, e₃) zuzuordnen.

36. Kommunikationssystem gemäss einem der Ansprüche 31 bis 35, **dadurch gekennzeichnet, dass** das verwendete Spracherkennungssystem (13, 41) benutzerabhängige Sprachmodelle verwendet.

37. Kommunikationssystem gemäss einem der Ansprüche 31 bis 36, **gekennzeichnet durch** Zugriffrechte für verschiedene Personen auf verschiedene Stellen der Daten, die mit bestimmten Metadaten (M₁, M₂, M₃) gekennzeichnet sind.

## Claims

1. Method for continuously recording surrounding information by a mobile device (11) with the following method steps:
(a) the mobile device (11) of a user (1) continuously records surrounding information and sends the data to a remote server, wherein the mobile device (11) is a mobile telephone and comprises an identification module (12) for identification of the mobile device (11) of the user (1) in a mobile radio network (3),
(b) the data are classified and/or indexed automatically depending on the content of the data and/or on metadata (M₁, M₂, M₃) that are generated from external events (e₁, e₂, e₃) in relation to the mobile device (11) and/or by the user (1),
(c) the classified and/or indexed data are stored in the remote server (4) in a memory area (42) associated to the user (1),
(d) after the identification of the user, the classified and/or indexed data are searched in the memory area (42) from the mobile device (11).

2. The method of claim 1, **characterized in that** from the recorded data one or a plurality of files (7) are generated in the mobile device (11) or in the remote server (4).

3. Method according to claim 2, with the following method step:
the metadata (M₁, M₂, M₃) are associated temporally with the file (7) generated or derived therefrom, according to the external events (e₁, e₂, e₃) or this file (7) is subdivided through the metadata (M₁, M₂, M₃) in such a manner that the file (7) can be searched according to the associated metadata (M₁, M₂, M₃).

4. Method according to claim 2 or 3, **characterized in that** the mobile device (11) is a mobile telephone connected to a mobile radio network (3) and all recorded surrounding information is sent to a remote server (4) and said file (7) is stored there together with the metadata (M₁, M₂, M₃) in a memory area (42) allocated to the user.

5. Method according to one of the claims 1 to 4, **characterized in that** the external events (e₁, e₂, e₃) are recorded automatically, are preprogrammed and/or are set individually by the user (1).

6. Method according to one of the claims 1 to 5, **characterized in that** the content of the data and the external events (e₁, e₂, e₃) include the location or changes of the location of the mobile device (11), features in the room, data, time, events within the mobile device (11) or data from sensors (14) connected to the mobile device (11), predetermined noises within the file that are to be detected in the vicinity and/or recorded conversations or interlocutors of the user (1).

7. Method according to one of the claims 1 to 6, **characterized in that** the mobile device (11) is in a sleep mode if no useful wanted signals is received.

8. Method according to one of the claims 1 to 7, **characterized in that** the mobile device (11) records, converts digitally and analyzes all data and if these are not recognized as meaningful, they are not transmitted to the remote server (4).

9. Method according to one of the claims 1 to 7, **characterized in that** the mobile device (11) records all data and if they are recognized as being meaningless before the digital conversion, the device (11) switches to a sleep mode.

10. Method according to one of the claims 1 to 9, **characterized in that** a sleep mode of the recording function is independent of the sleep mode of the mobile device (11).

11. Method according to one of the claims 7 to 10, **characterized in that** switching to a sleep mode or awakening from the sleep mode can be initiated automatically by a noise or an image, or automatically depending on said events, or by the user, or automatically periodically or by the remote server (4).

12. Method according to one of the claims 7 to 11, **characterized in that** events (e₁, e₂, e₃) can also be transmitted by the mobile device (11) to the remote server (4) when the mobile device (11) is in the sleep mode.

13. Method according to one of the claims 1 to 12, characterized that a local buffering of the received signals or file parts in the memory of the mobile device (11) takes place before transmission to the remote server (4).

14. Method according to one of the claims 1 to 13, **characterized in that** a voice recognition system (13, 41) converts the recorded data into a text file and the metadata (M₁, M₂, M₃) are associated temporally to the generated text file according to the external events (e₁, e₂, e₃).

15. Method according to one of the claims 1 to 14, **characterized in that** a voice recognition system (13, 41) converts the recorded data into a text file and recognizes different conversation parts of a conversation and the participation of at least one interlocutor is used as metadata (M₁, M₂, M₃).

16. Method according to claim 14 or 15, **characterized in that** the used voice recognition system (13, 41) uses user-dependent language models.

17. Method according to one of the claims 14 to 16, **characterized in that** new language models are established through new conversations for the individual interlocutors.

18. Method according to one of the claims 14 to 17, **characterized in that** the voice recognition occurs locally in the mobile device (11) or in the remote server (4).

19. Method according to one of the claims 14 to 18, **characterized in that** the recorded data and/or the text file are stored.

20. Method according to one of the claims 1 to 19, **characterized in that** audio, video or text data transmitted to the remote server (4) are signed by means of a certificate by the mobile device (11) in order to guarantee the authenticity of the data.

21. Method according to one of the claims 1 to 20, **characterized in that** the user (1) of said recorded data adds further data.

22. Method according to one of the claims 1 to 21, **characterized in that** the recorded data are marked with metadata (M₁, M₂, M₃) by the user at a later stage after the recording.

23. Method according to one of the claims 1 to 22, **characterized in that** different persons have access rights to different parts of the data that are marked with certain metadata (M₁, M₂, M₃).

24. Method according to one of the claims 1 to 23, **characterized in that** the user (1) has access to the recorded data from his mobile device (11), over an Internet site or over a calendar program and searches these data according to contents or according to metadata (M₁, M₂, M₃).

25. Method according to one of the claims 1 to 24, **characterized in that** the search is performed over a voice command.

26. Method according to one of the claims 1 to 25, **characterized in that** a program or applet is provided on the mobile device (11) that performs the continuous recording and the processing of the recorded data.

27. Method according to one of the claims 1 to 26, **characterized in that** a service provider offers a user (1) of a mobile device (11) such a method and bills a corresponding service to the user (1).

28. Method according to one of the claims 1 to 27, **characterized in that** a video recording is made permanently by the mobile device (11) or by a device connected to the mobile device (11) and the data are also sent to the remote server (4).

29. Method according to one of the claims 1 to 28, **characterized in that** the classification and/or the indexing of the recorded data occurs through conversion into a markup language file (XML, Voice XML), which performs a subdivision in different files, where each file is connected with metadata or by adding a marked index in an audio file.

30. Method according to one of the claims 1 to 29, **characterized in that** the search results are reproduced as text or as synthetic voice.

31. Communication system for continuously recording surrounding information comprising:
(a) a mobile device (11) of a user (1) for continuously recording surrounding information and sending the data to a remote server (4), wherein the mobile device (11) is a mobile telephone and comprises an identification module (12) for identification of the mobile device (11) of the user (1) in a mobile radio network (3),
(b) means for automatically classifying and/or indexing the recorded data depending on the content of the data and/or on metadata (M₁, M₂, M₃) that are generated from external events (e₁, e₂, e₃) in relation to the mobile device (11) and/or by the user (1),
(c) a memory area (42) associated to the user (1) in the remote server (4) configured to store the classified and/or indexed data, wherein after the identification of the user, the classified and/or indexed data are searchable in the memory area (42) from the mobile device (11).

32. Communication system according to claim 31, **characterized by** means in the mobile device (11) or in the remote server (4) for generating from the recorded data one or a plurality of files (7).

33. Communication system according to claim 32, **characterized by** means for temporally associating the metadata (M₁, M₂, M₃) with the file 7 generated or derived therefrom, according to the external events (e₁, e₂, e₃) or for subdividing this file (7) through the metadata (M₁, M₂, M₃) in such a manner that the file (7) can be searched according to the associated metadata (M₁, M₂, M₃).

34. Communication system according to claim 31 or 32, **characterized in that** the mobile device (11) is a mobile telephone connected to a mobile radio network (3) and a remote server (4) is connected to the mobile radio network (3).

35. Communication system according to one of the claims 31 to 34, **characterized by** a voice recognition system (13, 41) that converts the recorded data into a text file, means being provided for temporally associating the metadata (M₁, M₂, M₃) with the generated text file according to the external event (e₁, e₂, e₃).

36. Communication system according to one of the claims 31 to 35, **characterized in that** the used voice recognition system (13, 41) uses user-dependent language models.

37. Communication system according to one of the claims 31 to 36, **characterized by** access rights for different people to different portions of the data that are marked with certain metadata (M₁, M₂, M₃).

## Revendications

1. Procédé pour l'enregistrement continu de données sur l'environnement par un dispositif mobile (11), comprenant les étapes suivantes:
(a) le dispositif mobile (11) d'un utilisateur (1) enregistre en continu des données sur l'environnement et envoie les données à un serveur à distance, le dispositif mobile (11) étant un téléphone portable et possédant un module d'identification (12) pour identifier le dispositif mobile (11) de l'utilisateur (1) dans un réseau de communication mobile (3);
(b) les données sont automatiquement subdivisées et/ou indexées en fonction du contenu des données et/ou de métadonnées (M₁, M₂, M₃) générées à partir d'événements externes (e₁, e₂, e₃) en relation avec le dispositif mobile (11) et/ou par l'utilisateur (1),
(c) les données subdivisées et/ou indexées sont stockées dans une zone de mémoire (42) attribuée à l'utilisateur (1) dans le serveur à distance (4),
(d) après une identification de l'utilisateur, les données subdivisées et/ou indexées qui se trouvent dans la zone de mémoire (42) font l'objet de recherches depuis le dispositif mobile (11).

2. Procédé selon la revendication 1, **caractérisé en ce qu'**un fichier ou une pluralité de fichiers (7) sont générés dans le dispositif mobile (11) ou dans le serveur à distance (4) à partir des données enregistrées.

3. Procédé selon la revendication 2, comprenant les étapes suivantes:
les métadonnées (M₁, M₂, M₃) sont associées au fichier (7) généré ou dérivé de celles-ci correspondant au niveau temporel à l'événement externe (e₁, e₂, e₃) ou ce fichier (7) est subdivisé par les métadonnées (M₁, M₂, M₃) de telle sorte que le fichier (7) peut faire l'objet de recherches en fonction des données associées (M₁, M₂, M₃).

4. Procédé selon la revendication 2 ou 3, **caractérisé en ce que** le dispositif mobile (11) est un téléphone portable connecté à un réseau de communication mobile (3) et toutes les données sur l'environnement enregistrées sont envoyées à un serveur à distance (4) et ledit fichier (7) y est stocké avec les métadonnées (M₁, M₂, M₃) dans une zone de mémoire (42) attribuée à l'utilisateur.

5. Procédé selon l'une des revendications 1 à 4, **caractérisé en ce que** les événements externes (e₁, e₂, e₃) sont saisis automatiquement, sont préprogrammés ou sont définis individuellement par l'utilisateur (1).

6. Procédé selon l'une des revendications 1 à 5, **caractérisé en ce que** le contenu des données et les événements externes (e₁, e₂, e₃) comprennent la position ou les changements de position du dispositif mobile (11), les caractéristiques dans l'espace, la date, l'heure, les événements au sein du dispositif mobile (11) ou des données de capteurs (14) reliés au dispositif mobile (11), des bruits prédéterminés au sein des données qui peuvent être perçus dans l'environnement et/ou des conversations enregistrées ou des interlocuteurs de l'utilisateur (1).

7. Procédé selon l'une des revendications 1 à 6, **caractérisé en ce que** le dispositif mobile (11) se trouve en mode de veille lorsqu'aucun signal utile significatif n'est reçu.

8. Procédé selon l'une des revendications 1 à 7, **caractérisé en ce que** le dispositif mobile (11) enregistre toutes les données, les convertit numériquement et les analyse, et lorsque celles-ci ne sont pas reconnues comme étant significatives, ne les transmet pas au serveur à distance (4).

9. Procédé selon l'une des revendications 1 à 7, **caractérisé en ce que** le dispositif mobile (11) enregistre toutes les données et, lorsque celles-ci ne sont pas reconnues comme étant significatives avant la conversion numérique, le dispositif (11) passe en mode de veille.

10. Procédé selon l'une des revendications 1 à 9, **caractérisé en ce qu'**un mode de veille de la fonction d'enregistrement est indépendant du mode de veille du dispositif mobile (11).

11. Procédé selon l'une des revendications 7 à 10, **caractérisé en ce que** le mise en ou la réactivation hors du mode de veille est initiée automatiquement par un bruit ou une image, automatiquement en fonction desdits événements, par l'utilisateur ou automatiquement de façon périodique ou par le serveur à distance (4).

12. Procédé selon l'une des revendications 7 à 11, **caractérisé en ce que** les événements (e₁, e₂, e₃) sont transmis par le dispositif mobile (11) aussi au serveur à distance (4) lorsque le dispositif mobile (11) se trouve en mode de veille.

13. Procédé selon l'une des revendications 1 à 12, **caractérisé en ce que** un tamponnage local de signaux reçus ou de parties de fichiers est effectué dans la zone mémoire du dispositif mobile (11) avant la transmission au serveur à distance (4).

14. Procédé selon l'une des revendications 1 à 13, **caractérisé en ce qu'**un système de reconnaissance vocale (13, 41) transforme les données enregistrées en un fichier texte et les métadonnées (M₁, M₂, M₃) sont associées au fichier texte généré correspondant au niveau temporel à l'événement externe (e₁, e₂, e₃).

15. Procédé selon l'une des revendications 1 à 14, **caractérisé en ce qu'**un système de reconnaissance vocale (13, 41) transforme les données enregistrées en un fichier texte et reconnait différents interlocuteurs d'une conversation et la participation d'au moins un interlocuteur est utilisée à titre de métadonnées (M₁, M₂, M₃).

16. Procédé selon l'une des revendications 14 ou 15, **caractérisé en ce que** le système de reconnaissance vocale (13, 41) met en oeuvre des modèles linguistiques dépendants de l'utilisateur.

17. Procédé selon l'une des revendications 14 à 16, **caractérisé en ce qu'**au travers de nouvelles conversations, des nouveaux modèles linguistiques sont établis pour les interlocuteurs respectifs.

18. Procédé selon l'une des revendications 14 à 17, **caractérisé en ce que** la reconnaissance vocale s'effectue localement dans le dispositif mobile (11) ou dans le serveur à distance (4).

19. Procédé selon l'une des revendications 14 à 18, **caractérisé en ce que** les données enregistrées et/ou le fichier texte sont mémorisés.

20. Procédé selon l'une des revendications 1 à 19, **caractérisé en ce que** les données audio, vidéo ou texte transmises au serveur à distance (4) sont signées par le dispositif mobile (11) au moyen d'un certificat afin d'assurer l'authenticité des données.

21. Procédé selon l'une des revendications 1 à 20, caractérisé en ce l'utilisateur (1) desdites données enregistrées ajoute des données supplémentaires.

22. Procédé selon l'une des revendications 1 à 21, caractérisé en ce les données enregistrées sont marquées par l'utilisateur avec des métadonnées (M₁, M₂, M₃) à un stade ultérieur après l'enregistrement.

23. Procédé selon l'une des revendications 1 à 22, caractérisé en ce différentes personnes ont des droits d'accès à différentes positions des données qui sont marquées avec certaines métadonnées (M₁, M₂, M₃).

24. Procédé selon l'une des revendications 1 à 23, caractérisé en ce l'utilisateur (1) a accès aux données enregistrées à partir du dispositif mobile (11), au travers d'une page Internet ou par le biais d'un programme de calendrier et recherche ces données selon leurs contenus ou en fonction des métadonnées (M₁, M₂, M₃).

25. Procédé selon l'une des revendications 1 à 24, caractérisé en ce la recherche s'effectue par le biais d'une commande vocale.

26. Procédé selon l'une des revendications 1 à 25, **caractérisé en ce qu'**un programme ou applet est disponible sur le dispositif mobile (11) pour effectuer l'enregistrement en continu et le traitement des données enregistrées.

27. Procédé selon l'une des revendications 1 à 26, **caractérisé en ce qu'**un prestataire de services offre un tel procédé à un utilisateur (1) d'un dispositif mobile (11) et facture un service correspondant à l'utilisateur (1).

28. Procédé selon l'une des revendications 1 à 27, **caractérisé en ce qu'**un enregistrement vidéo est réalisé continuellement par le dispositif mobile (11) ou par un appareil lié au dispositif mobile (11) et que les données sont également envoyées au serveur à distance (4).

29. Procédé selon l'une des revendications 1 à 28, **caractérisé en ce que** la subdivision et/ou l'indexation des données enregistrées s'effectue par conversion en un fichier de langue de balisage (XML, VoiceXML) qui exécute une subdivision en différents fichiers, chaque fichier étant associé avec des métadonnées, ou s'effectue par l'adjonction d'un index marqué dans un fichier audio.

30. Procédé selon l'une des revendications 1 à 29, **caractérisé en ce que** les résultats de recherches sont reproduits comme texte ou sous forme de voix synthétique.

31. Système de communication pour l'enregistrement en continu de données sur l'environnement, comprenant:
(a) un dispositif mobile (11) d'un utilisateur (1) conçu pour l'enregistrement en continu de données sur l'environnement et pour l'envoi des données à un serveur à distance (4), le dispositif mobile (11) étant un téléphone portable et possédant un module d'identification (12) pour l'identification du dispositif mobile (11) de l'utilisateur (1) dans un réseau de communication mobile (3),
(b) des moyens pour subdiviser et/ou indexer les données enregistrées automatiquement en fonction du contenu des données et/ou de métadonnées (M₁, M₂, M₃) générées à partir d'événements externes (e₁, e₂, e₃) en relation avec le dispositif mobile (11) et/ou par l'utilisateur (1),
(c) une zone de mémoire (42) attribuée à l'utilisateur dans le serveur à distance (4), conçue pour stocker les données subdivisées et/ou indexées, les données subdivisées et/ou indexées pouvant faire l'objet de recherches depuis le dispositif mobile (11) dans la zone de mémoire (42) après une identification de l'utilisateur.

32. Système de communication selon la revendication 31, **caractérisé par** des moyens dans le dispositif mobile (11) ou dans le serveur à distance (4) pour générer un fichier ou une pluralité de fichiers (7) à partir des données enregistrées.

33. Système de communication selon la revendication 32, **caractérisé par** des moyens pour associer les métadonnées (M₁, M₂, M₃) au fichier (7) généré ou dérivé de celles-ci correspondant au niveau temporel à l'événement externe (e₁, e₂, e₃) ou pour subdiviser ce fichier (7) par les métadonnées (M₁, M₂, M₃) de telle sorte que le fichier (7) peut faire l'objet de recherches en fonction des données associées (M₁, M₂, M₃).

34. Système de communication selon la revendication 31 ou 32, **caractérisé en ce que** le dispositif mobile (11) est connecté à un réseau de communication mobile (3) et est relié au réseau de communication mobile (3) du serveur à distance (4).

35. Système de communication selon l'une des revendications 31 à 34, **caractérisé par** un système de reconnaissance vocale (13, 41) qui transforme les données enregistrées en un fichier texte, des moyens étant prévus pour associer les métadonnées (M₁, M₂, M₃) au fichier texte généré en fonction du temps à l'événement externe (e₁, e₂, e₃).

36. Système de communication selon l'une des revendications 31 à 35, **caractérisé en ce que** le système de reconnaissance vocal (13, 41) utilisé met en oeuvre des modèles linguistiques dépendants de l'utilisateur.

37. Système de communication selon l'une des revendications 31 à 36, **caractérisé par** des droits d'accès pour différentes personnes à différents positions des données qui sont marquées avec certaines métadonnées (M₁, M₂, M₃).
